# FASCICULE DE BREVET EUROPEEN

(11) **EP 0 644 410 B1**
(45) Date de publication et mention de la délivrance du brevet: **07.04.1999**
(21) Numéro de dépôt: 94420250.6
(22) Date de dépôt: 20.09.1994
(51) Int. Cl.: G01K 7/06

(54) **Thermocouple-capteur et son procédé de fabrication**
Thermoelementfühler und Verfahren zu seiner Herstellung
Thermocouple sensor and method of making it

(30) Priorité: 21.09.1993 FR 9311428
(43) Date de publication de la demande: 22.03.1995
(73) Titulaire: CENTRE DE RECHERCHE EN MACHINES THERMIQUES C.R.M.T., F-69570 Dardilly (FR)
(72) Inventeur: Haupais, Alain, F-69890 La Tour de Salvagny (FR); Roche, Charles, F-69100 Villeurbanne (FR)
(74) Mandataire: Ropital-Bonvarlet, Claude

(56) Documents cités:
- DE-C- 633 828
- US-A- 1 849 832
- US-A- 3 466 200
- I.S.A. JOURNAL, vol.6, no.6, Juin 1959, PITTSBURG (US) pages 47 - 49 C.E. MOELLER 'SPECIAL THERMOCOUPLE SOLVES SURFACE-TEMPERATURE PROBLEM'
- ICIASF '87 RECORD, 22 Juin 1987, WILLIAMSBURG (US) pages 369 - 377, XP11355 V. MENTRE E.A. 'AN IMPROVED DATA REDUCTION TECHNIQUE FOR HEAT TRANSFER MEASUREMENTS USING SURFACE THERMOCOUPLES OR THIN-FILMS'

## Description

La présente invention est relative au domaine des capteurs utilisés dans de nombreuses applications pour apprécier des paramètres variables tels que la proximité d'un organe matériel, la température, le cheminement d'une matière première, etc.

La technique antérieure connaît, dans ce sens, un grand nombre de propositions qui doivent être considérées comme donnant satisfaction pour les applications particulières pour lesquelles elles sont envisagées.

Dans des domaines spécifiques, tels que dans celui de la plasturgie des matières plastiques, du moulage des métaux et du verre, de l'étude de transfert thermique dans des machines ou éléments de machine, voire de la cuisson de matière, il est de plus en plus important de pouvoir apprécier le cheminement de la matière injectée dans l'empreinte du moule ainsi que sa température afin de pouvoir analyser, contrôler ou réguler les conditions de moulage.

Dans ces domaines d'application, l'objectif recherché ne peut être atteint qu'en implantant dans un moule un ou plusieurs capteurs devant obligatoirement être placés sur le cheminement de la matière injectée afin de pouvoir relever l'un au moins des paramètres énoncés.

La difficulté générale à résoudre est alors celle de pouvoir implanter un tel capteur sur l'ensemble fonctionnel à étudier compte tenu de l'encombrement général des installations de moulage, de la présence d'organes essentiels incontournables tels qu'éjecteurs, noyaux, tiroirs, et de l'existence de circuits, soit de refroidissement, soit de chauffage.

Compte tenu de ces dispositions, il apparaît de plus en plus difficile sinon impossible d'implanter dans un moule un ou plusieurs capteurs supplémentaires dont la tête ou surface sensible doit être située impérativement, soit dans le conduit de cheminement de la matière, soit dans l'empreinte réservée au moulage.

L'idée s'est alors trouvée de rechercher à utiliser un thermocouple classique déjà adapté sur un moule. Dès lors qu'une telle proposition est posée, encore faut-il pouvoir la réaliser en sachant que dans les moules d'injection les thermocouples à implanter ne peuvent présenter qu'un encombrement faible et une section droite transversale réduite.

L'objet de l'invention est de proposer une structure nouvelle de thermocouple-capteur qui permette de réaliser un organe de mesure de faible section, susceptible d'être implanté dans les moules et capable d'assurer sa fonction de façon fiable et certaine tout en étant placé de façon affleurante au circuit de cheminement de la matière.

L'objet de l'invention est aussi de fournir un thermocouple-capteur de faibles dimensions, capable de fournir une mesure d'une température de surface et éventuellement d'un flux thermique et aussi de supporter les conditions généralement sévères qui résultent du contact avec la matière en cheminement.

Pour atteindre les objectifs ci-dessus, l'objet de l'invention, du type comprenant, d'une part, un corps tubulaire en une matière conductrice, traversé par un logement, lié à une connexion extérieure et présentant une face de détection et, d'autre part, une âme également en matière conductrice, capable de fournir un effet thermocouple avec celle du corps, disposée dans le logement, aboutissant à la face de détection et liée, à l'opposé, à une connexion extérieure au corps, et comportant, à l'opposé de la connexion extérieure, une partie terminale de section croissante, est caractérisé en ce que
- l'âme est constituée par un fil choisi en une matière conductrice, pourvu d'une couche extérieure de matière diélectrique et comportant, à l'opposé de la connexion extérieure, une partie terminale de section croissante,
- la partie terminale est encastrée par sa couche diélectrique dans le logement, sans contact électrique avec le corps et affleure la face de détection,
- la partie terminale et la face de détection sont recouvertes d'une pastille de contact conductrice.

L'invention a encore pour objet un procédé de réalisation du capteur thermocouple, un tel procédé consistant à :
- ménager dans un corps conducteur, à partir d'une face dite de détection, un logement traversant,
- préparer une âme, choisie en une matière conductrice capable de fournir un effet thermocouple avec celle du corps, pour conférer à ladite âme une section générale inférieure à celle du logement et pour lui faire comporter une partie terminale de section croissante dont la mesure moyenne est supérieure à la section du logement dans le plan de la face de détection,
- former sur l'âme une couche de matière diélectrique,
- engager l'âme dans le logement par la face de détection pour traverser totalement ledit corps et amener la partie terminale au droit de la face de détection,
- encastrer la partie terminale dans le logement par pénétration partielle du corps dans la couche de matière diélectrique,
- araser la partie terminale dans le plan de la face de détection,
- recouvrir la face de détection et la partie terminale par une pastille de contact conductrice.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une coupe-élévation de l'objet de l'invention.

Les **fig. 2** à **6** sont des coupes-élévations partielles illustrant différentes étapes du procédé de fabrication.

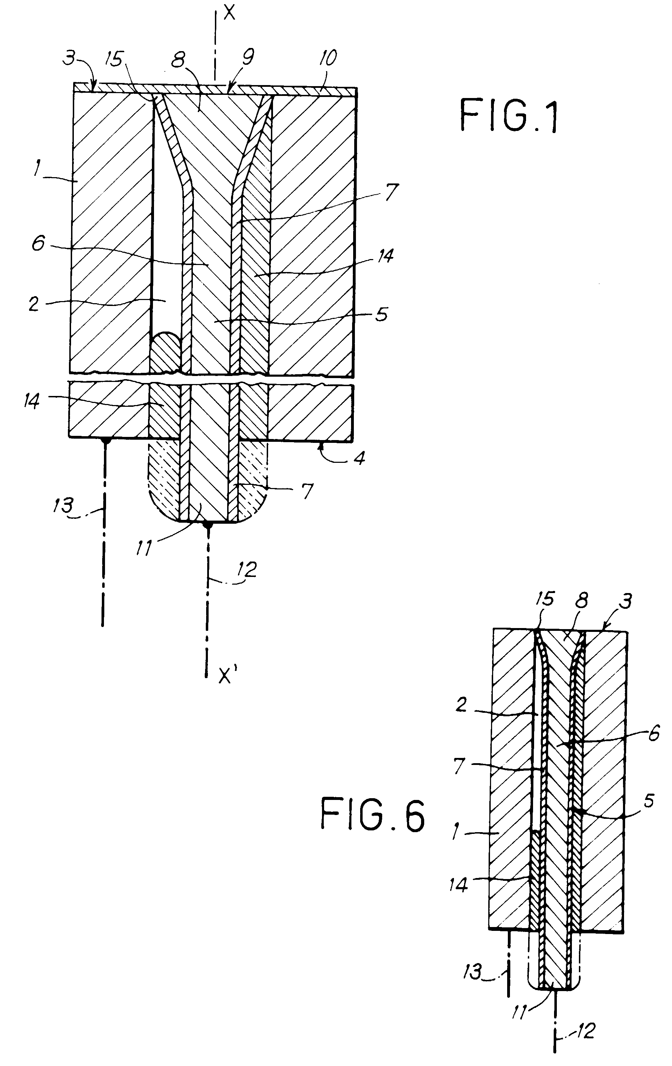

La **fig. 1** montre le thermocouple selon l'invention qui comprend un corps **1** en une matière conductrice appropriée telle qu'en acier, alliage cuivreux, alliage d'aluminium. Le corps **1** est traversé par un logement **2**, de préférence de direction axiale, s'ouvrant au droit d'une face **3**, dite de détection, de même qu'au droit d'une face arrière **4**, dite de connexion. Le logement **2** peut être réalisé de toute façon appropriée pour conférer au corps **1** un caractère tubulaire en étant centré ou non par rapport à l'axe **x-x'** de ce dernier et en présentant ou non une section circulaire qui est, dans tous les cas, de préférence constante sur toute la longueur. Ainsi, selon les modes de réalisation retenus, le logement **2** peut être assimilé à un alésage cylindrique axial.

Le thermocouple-capteur comprend, par ailleurs, une âme **5** qui est constituée par un fil **6** en tout matériau approprié tel qu'en constantan. Le fil **6** est revêtu périphériquement d'une couche **7** de matière diélectrique qui peut être produite par réaction chimique superficielle avec l'un des composants ou le composant constitutif du fil **6** ou encore par dépôt d'une couche minérale ou organique diélectrique.

Le fil **6** présente une tête **8** constituée par une partie terminale de section croissante en direction de l'extrémité correspondante et dont la périphérie est également pourvue de la couche **7**. La tête **8** est encastrée dans le logement **2** et dans le plan de la face **3** avec pénétration partielle du corps **1** dans la couche **7**. La tête **8** affleure par sa face transversale **9** la face de détection **3** qui est pourvue d'une pastille de contact conductrice **10** telle qu'en nickel, or, chrome, recouvrant également la face transversale **9** de la tête **8**. La pastille **10** peut être mono ou multicouche et être réalisée par dépôt chimique, électrolytique, sous vide ou encore rapportée par soudure ou collage.

L'âme **5** possède une longueur hors tout supérieure à celle du corps **1** de manière que sa partie terminale **11** fasse saillie hors de la face **4** au-delà de laquelle elle est liée à un conducteur **12** rapporté de toute façon convenable pour que la connexion établie soit mécaniquement ferme et résistante et électriquement conductrice.

Un conducteur **13** est lié par une connexion semblable au corps **1** et, par exemple, sur la face de connexion **4**.

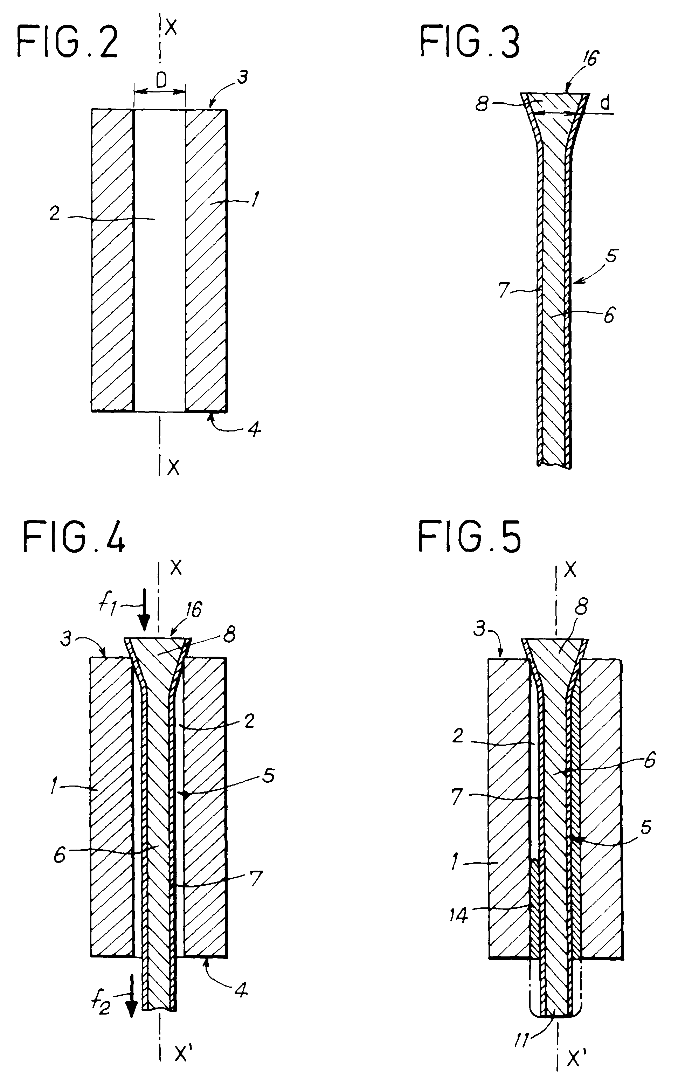

L'âme **5** est, de préférence, centrée dans le logement **2** en prévoyant d'interposer dans l'espace annulaire subsistant un garnissage ou un enrobage **14**, en toute matière isolante appropriée, pouvant occuper une partie du logement **2**, comme illustré en partie gauche de la **fig. 5,** par rapport à l'axe **x-x',** ou totalement le logement **2** comme illustré en partie droite de la même figure par rapport au même axe **x-x'**. A titre d'exemple, la matière isolante **14** peut être un élastomère ou une céramique.

Ainsi que cela ressort de la description ci-dessus et de l'examen de la **fig. 1,** le thermocouple-capteur, selon l'invention, présente un faible encombrement en section droite transversale et comporte une âme **5** en matière conductrice qui est isolée du corps **1** la contenant au moins par l'intermédiaire de la couche diélectrique **7**. Ainsi, l'âme **5** peut remplir correctement sa fonction de pôle conducteur en contact conducteur avec la pastille **10** qui est elle-même en contact électrique avec le corps **1** sans l'établissement d'une liaison directe, étant donné que la pastille **10** est aussi liée à la bague **15** isolante que forme la section droite transversale de la matière diélectrique interposée entre les surfaces **3** et **9**.

Pour obtenir le thermocouple-capteur décrit ci-dessus, un procédé conforme à l'invention consiste, selon la **fig. 2,** à disposer d'un corps **1**, par exemple en acier, présentant un logement **2** qui peut être réalisé à la demande ou être issu de la fabrication du corps **1**, dans le cas où ce dernier est constitué par un segment tubulaire. De préférence, le logement **2** est pratiqué selon l'axe **x-x'** qui est aussi celui du corps **1**.

Une seconde étape, selon la **fig. 3,** consiste à fabriquer l'âme **5** en prévoyant un segment ou tronçon de fil **6** comportant la partie terminale **8** qui peut être formée par différents procédés connus de l'homme de l'art. A titre d'exemple, il peut être cité un procédé mécanique par roulage, matriçage, estampage, voire filage, de manière que la partie terminale **8** présente une section croissant vers l'extrémité correspondante **16**. La forme de la partie terminale **8** peut donc s'assimiler, dans le cas où le fil **6** est de forme cylindrique, à une portée tronconique qui serait liée au fil **6** par la petite base. La partie terminale **8** est réalisée pour que la section droite transversale moyenne entre la petite et la grande bases et, par exemple, figurée en **d** à la **fig. 3** soit de l'ordre de la section d'entrée **D** de l'alésage **2**.

Une autre étape consiste ensuite à former sur le fil **6** et la partie terminale **8** la couche diélectrique **7**, soit en procédant par oxydation de la matière ou d'un composant de la matière du fil **6**, soit encore en déposant sur ce dernier une couche d'oxyde métallique telle que de l'alumine ou du silicium.

Une étape suivante de fabrication du thermocouple-capteur consiste. comme cela est illustré par la **fig.4**, à engager l'âme **5** par l'extrémité opposée à partie terminale **8** dans le logement **2** et à partir de la face transversale de détection **3** du corps **1**. Un tel engagement est conduit pour amener la partie terminale **8** en encastrement sur la face **3**, soit en agissant par poussée dans le sens de la flèche **f**_{**1**} sur la face **16**, soit en agissant par traction dans le sens **f**_{**2**} sur l'extrémité opposée du fil faisant saillie hors de la face de connexion **4** du corps **1**. L'encastrement est réalisé de manière que la partie angulaire délimitée entre la face **3** et le logement **2** et définissant l'orifice de ce dernier dans le plan de la face **3**, s'encastre dans une partie seulement de l'épaisseur de la couche diélectrique **7**, de manière à laisser subsister la bague diélectrique **15** entre la face **3** et la partie terminale **8**.

Une étape supplémentaire, telle qu'illustrée par la **fig. 5**, peut consister à compléter le maintien et l'engagement de l'âme **5** à l'intérieur du logement **2** en comblant ce dernier, ou tout au moins l'espace annulaire ménagé par la présence du fil **6**, par apport du produit isolant **14** coulé par tout moyen convenable pour occuper, soit une partie du logement **2**, comme illustré en partie gauche de la **fig. 5** par rapport à l'axe **x-x'**, soit la totalité de l'espace annulaire, comme illustré en partie droite. Cette opération peut être exécutée de toute façon appropriée en mettant en oeuvre tous les moyens techniques connus pour faciliter la pénétration de la matière **14** à l'intérieur du logement **2** et, le cas échéant, aussi en maintenant l'âme **5** sous une précontrainte de tension axiale, de manière à assurer son alignement à l'intérieur du logement **2** parallèlement à l'axe **x-x'** pour éviter que, par torsion préexistante, un contact de surface ne puisse être établi à l'intérieur du logement **2** avec l'âme **5**. Une telle précontrainte peut aussi être envisagée pour réduire les amplitudes de vibration interne qui pourront être appliquées à l'âme **5** en cours d'utilisation. Dans le cas d'application d'une précontrainte, cette dernière est supprimée lorsque la matière **14** a durci ou suffisamment polymérisé pour former une liaison intime ferme entre le corps **1** et l'âme **5** dont la partie terminale **11**, située ou s'étendant hors de la face de connexion **4**, peut, le cas échéant, aussi être enrobée par la matière **14**.

Une autre étape de fabrication consiste alors à araser la partie terminale **8** dans le plan de la face de détection **3**, comme illustré par la **fig. 6**, pour former, avec cette dernière, la bague annulaire **15** de matière diélectrique et la partie terminale **8**, un plan dressé ou rectifié pour présenter un état de surface favorable à l'apposition ou à la fixation de la pastille de contact conductrice **10**.

L'étape finale consiste alors à établir les connexions sur le corps **4** et le fil **6** par fixation des conducteurs **12** et **13**.

Il doit, bien entendu, être envisagé que la phase d'arasement de la partie terminale **8**, préalable à l'apposition de la pastille **10**, puisse intervenir avant celle de comblement du logement **2** par la matière isolante **14**.

L'invention n'est pas limitée aux exemples décrits et représentés car diverses modifications peuvent y être apportées sans sortir de son cadre.

## Revendications

1. Thermocouple-capteur du type comprenant, d'une part, un corps tubulaire **(1)** en une matière conductrice, traversé par un logement **(2)**, lié à une connexion extérieure **(13)** et présentant une face de détection **(3)** et, d'autre part, une âme **(5)** également en matière conductrice, capable de fournir un effet thermocouple avec celle du corps, disposée dans le logement, aboutissant à la face de détection et liée, à l'opposé, à une connexion **(12)** extérieure au corps, et comportant, à l'opposé de la connexion extérieure, une partie terminale **(8)** de section croissante,
caractérisé en ce que :
- l'âme **(5)** est constituée par un fil conducteur comportant, à l'opposé de la connexion extérieure, une partie terminale de section croissante,
- l'âme **(5)** et la partie terminale **(8)** sont pourvues d'une couche extérieure **(7)** de matière diélectrique,
- la partie terminale **(8)** est encastrée par sa couche diélectrique dans le logement **(2)**, affleure la face de détection **(3)** et se trouve isolée du corps **(1)** dans le plan de la face **(3)** par une bague annulaire isolante **(15)** formée par la couche **(7)**,
- la partie terminale et la face de détection sont recouvertes d'une pastille de contact conductrice **(10)**.

2. Thermocouple-capteur selon la revendication 1, caractérisé en ce que l'âme **(5)** délimite avec le logement **(2)** un intervalle annulaire qui est en partie au moins comblé par un remplissage de matière isolante **(14)**.

3. Thermocouple-capteur selon la revendication 1 ou 2, caractérisé en ce que l'âme **(5)** s'étend, à l'opposé de la face de détection **(3)**, hors du corps et se trouve enrobée par la matière du remplissage **(14)**.

4. Thermocouple-capteur selon la revendication 1, caractérisé en ce que la couche **(7)** de matière diélectrique est formée par oxydation de la matière de l'âme.

5. Thermocouple-capteur selon la revendication 1, caractérisé en ce que la couche **(7)** de matière diélectrique est formée par dépôt d'un revêtement d'oxyde métallique.

6. Procédé de fabrication d'un thermocouple-capteur selon l'une des revendications 1 à 5, caractérisé en ce qu'il consiste à :
- ménager dans un corps conducteur **(1)**, à partir d'une face **(3)** dite de détection, un logement traversant **(2)**,
- préparer une âme **(5),** choisie en un matériau conducteur capable de fournir un effet thermocouple avec celle du corps, pour conférer à ladite âme une section générale inférieure à celle du logement et pour lui faire comporter une partie terminale **(8)** de section croissante dont la mesure moyenne **(d)** est supérieure à la section du logement dans le plan de la face de détection,
- former sur l'âme une couche de matière diélectrique **(7)**,
- engager l'âme dans le logement par la face de détection pour traverser totalement ledit corps et amener la partie terminale au droit de la face de détection,
- encastrer la partie terminale dans le logement par pénétration partielle du corps dans la couche de matière diélectrique,
- araser la partie terminale dans le plan de la face de détection,
- recouvrir la face de détection et la partie terminale par une pastille de contact conductrice **(10)**.

7. Procédé selon la revendication 6, caractérisé en ce qu'il consiste à adapter une connexion extérieure **(13)** sur le corps **(1)** et une autre **(12)** sur la partie de l'âme **(11)** opposée à la partie terminale **(8)** et faisant saillie hors du corps.

8. Procédé selon la revendication 6, caractérisé en ce qu'il consiste à encastrer la partie terminale **(8)** dans le logement **(2)** en soumettant l'âme à une contrainte d'étirement axial.

9. Procédé selon l'une des revendications 6 à 8, caractérisé en ce qu'il consiste à combler au moins en partie le logement occupé par l'âme, par apport d'une matière isolante **(14)**.

10. Procédé selon la revendication 9, caractérisé en ce que la matière isolante est déposée pour enrober également la partie **(11)** de l'âme **(5)** extérieure au corps.

## Patentansprüche

1. Thermoelementmeßfühler vom einen Typ, der einerseits ein röhrenförmiges Gehäuse (1) aus einem leitfähigen Material, in dem eine Aufnahme (2) vorgesehen ist, das mit einer Außenverbindung (13) verbunden ist und eine Detektorfläche (3) aufweist, und andererseits einen Kern (5) umfaßt, der ebenfalls aus leitfähigem Material besteht, das dazu geeignet ist, einen Thermoeffekt zusammen mit dem des Gehäuses hervorzurufen, der in der Aufnahme angeordnet ist, an der Detektorfläche endet und auf der anderen Seite mit einer Außenverbindung (12) mit dem Gehäuse verbunden ist und gegenüber der Außenverbindung einen Endabschnitt (8) mit größer werdendem Querschnitt umfaßt,
dadurch gekennzeichnet, daß:
- der Kern (5) aus einem Leitungsdraht besteht, der gegenüber der Außenverbindung einen Endabschnitt mit größer werdendem Querschnitt aufweist,
- der Kern (5) und der Endabschnitt (8) mit einer Außenschicht (7) aus dielektrischem Material versehen sind,
- der Endabschnitt (8) durch seine dielektrische Schicht in der Aufnahme (2) eingepaßt ist, die Detektorfläche (3) offen zu Tage tritt und von dem Gehäuse (1) in der Ebene der Fläche (3) durch einen isolierenden kreisförmigen Ring (15), gebildet durch die Schicht (7), isoliert wird,
- der Endabschnitt und die Detektorfläche bedeckt sind mit einem leitfähigen Kontaktplättchen (10).

2. Thermoelementmeßfühler nach Anspruch 1,
dadurch gekennzeichnet, daß
der Kern (5) zusammen mit der Aufnahme (2) einen kreisförmigen Zwischenraum einschließt, der wenigstens teilweise aufgefüllt ist mit einer Füllung aus isolierendem Material (14).

3. Thermoelementmeßfühler nach Anspruch 1 oder 2,
dadurch gekennzeichnet, daß
der Kern (5) sich von der Detektorfläche (3) ausgehend über das Gehäuse hinaus erstreckt und ummantelt wird durch das Füllmaterial (14).

4. Thermoelementmeßfühler nach Anspruch 1,
dadurch gekennzeichnet, daß
die Schicht (7) aus dielektrischem Material gebildet wird durch Oxidation des Materials, aus dem der Kern besteht.

5. Thermoelementmeßfühler nach Anspruch 1,
dadurch gekennzeichnet, daß
die Schicht (7) aus dielektrischem Material durch Ablagerung einer Verkleidung aus Metalloxid gebildet wird.

6. Verfahren zum Herstellen eines Thermoelementmeßfühlers nach einem der Ansprüche 1 bis 5,
dadurch gekennzeichnet, daß
es umfaßt:
- Aushöhlen einer durchgehenden Aufnahme (2) in einem leitfähigen Gehäuse (1), beginnend bei einer Detektorfläche genannten Fläche (3),
- Bearbeiten eines Kerns (5), der aus einem leitfähigen Material besteht, so daß es einen Thermoeffekt mit dem des Gehäuses hervorrufen kann, so daß der Kern einen Hauptabschnitt erhält, der kleiner als der der Aufnahme ist, und er einen Endabschnitt (8) mit größer werdendem Querschnitt erhält, dessen mittleres Maß (d) größer als der Querschnitt der Aufnahme in der Ebene der Detektorfläche ist,
- Bilden einer Schicht aus dielektrischem Material (7) auf dem Kern,
- Einführen des Kerns in die Aufnahme über die Detektorfläche, so daß das Gehäuse vollständig durchquert und der Endabschnitt in die Höhe der Detektorfläche gebracht wird,
- Einfügen des Endabschnitts in die Aufnahme durch teilweises Eindringen des Gehäuses in die Schicht aus dielektrischem Material,
- Abschleifen des Endabschnittes in der Ebene der Detektorfläche,
- Bedecken der Detektorfläche und des Endabschnittes mit einem leitfähigen Kontaktplättchen (10).

7. Verfahren nach Anspruch 6,
dadurch gekennzeichnet, daß
es umfaßt Anpassen einer Außenverbindung (13) an das Gehäuse (1) und einer weiteren (12) an den Abschnitt des Kerns (11) gegenüber dem Endabschnitt (8) und Vorspringenlassen über das Gehäuse hinaus.

8. Verfahren nach Anspruch 6,
dadurch gekennzeichnet, daß
es umfaßt Einpassen des Endabschnittes (8) in die Aufnahme (2) und axiales Dehnen des Kerns.

9. Verfahren nach einem der Ansprüche 6 bis 8,
dadurch gekennzeichnet, daß
es umfaßt Auffüllen wenigstens eines Teils der Aufnahme, in der sich der Kern befindet, durch Einbringen von isolierendem Material (14).

10. Verfahren nach Anspruch 9,
dadurch gekennzeichnet, daß
das isolierende Material ebenfalls zum Einhüllen des Teils (11) des Kerns (5) außerhalb des Gehäuses verwendet wird.

## Claims

1. Thermocouple sensor of the type comprising on the one hand a tubular body (1) made of conductive material, with a housing (2) passing through it, connected to an external connection (13) and having a detection face (3), and on the other hand a core (5) also made of conductive material, capable of supplying a thermocouple effect with that of the body, disposed in the housing, ending at the detection face and connected, at the opposite end, to a connection (12) external to the body and having, at the opposite end to the external connection, an end part (8) of increasing cross section,
characterised in that:
- the core (5) consists of a conductive wire having, at the opposite end to the external connection, an end part of increasing cross section,
- the core (5) and the end part (8) are provided with an external layer (7) of dielectric material,
- the end part (8) is embedded, through its dielectric layer, in the housing (2), is flush with the detection face (3) and is insulated from the body (1) in the same plane as the face (3) by an insulating annular ring (15) formed by the layer (7),
- the end part and the detection face are covered by a conductive contact slug (10).

2. Thermocouple sensor according to Claim 1,
characterised in that the core (5) delimits, with the housing (2), an annular gap which is at least partly filled in by a filling of insulating material (14).

3. Thermocouple sensor according to Claim 1 or 2,
characterised in that the core (5) extends, at the opposite end to the detection face (3), out of the body and is coated by the filling material (14).

4. Thermocouple sensor according to Claim 1,
characterised in that the layer (7) of dielectric material is formed by oxidation of the material of the core.

5. Thermocouple sensor according to Claim 1,
characterised in that the layer (7) of dielectric material is formed by the deposition of a covering of metallic oxide.

6. Method of manufacturing a thermocouple sensor according to one of Claims 1 to 5, characterised in that it consists of:
- forming, in a conductive body (1), from a so-called detection face (3), a through housing (2),
- preparing a core (5), chosen in a conductive material capable of supplying a thermocouple effect with that of the body, in order to confer on said core an overall cross section less than that of the housing and in order to give it an end part (8) with an increasing cross section, the mean measurement (d) of which is greater than the cross section of the housing in the same plane as the detection face,
- forming on the core a layer of dielectric material (7),
- engaging the core in the housing through the detection face in order to pass through said body completely and to bring the end part in line with the detection face,
- embedding the end part in the housing by partial penetration of the body into the layer of dielectric material,
- levelling the end part in the same plane as the detection face,
- covering the detection face and the end part with a conductive contact slug (10).

7. Method according to Claim 6, characterised in that it consists of fitting an external connection (13) to the body (1) and another (12) to the part of the core (11) opposite to the end part (8) and projecting out of the body.

8. Method according to Claim 6, characterised in that it consists of embedding the end part (8) in the housing (2) whilst subjecting the core to an axial stretching force.

9. Method according to one of Claims 6 to 8,
characterised in that it consists of at least partly filling in the housing occupied by the core, by adding an insulating material (14).

10. Method according to Claim 9, characterised in that the insulating material is deposited so as also to coat the part (11) of the core (5) external to the body.
